# EUROPÄISCHE PATENTSCHRIFT

(11) **EP 1 828 553 B1**
(45) Veröffentlichungstag und Bekanntmachung des Hinweises auf die Patenterteilung: **15.08.2012**
(21) Anmeldenummer: 05802053.8
(22) Anmeldetag: 11.11.2005
(51) Int. Cl.: F01L 1/344

(54) **NOCKENWELLENVERSTELLER FÜR EINE BRENNKRAFTMASCHINE**
CAMSHAFT ADJUSTER FOR AN INTERNAL COMBUSTION ENGINE
DISPOSITIF DE REGLAGE D'ARBRE A CAMES POUR UN MOTEUR A COMBUSTION INTERNE

(30) Priorität: 23.12.2004 DE 102004062071
(43) Veröffentlichungstag der Anmeldung: 05.09.2007
(73) Patentinhaber: Schaeffler Technologies AG & Co. KG, 91074 Herzogenaurach (DE)
(72) Erfinder: KLEIBER, Thomas, 66265 Wahlschied (DE); OTTERSBACH, Rainer, 91086 Aurachtal (DE)
(86) Internationale Anmeldenummer: PCT/EP2005/012097
(87) Internationale Veröffentlichungsnummer: WO 2006/074737

(56) Entgegenhaltungen:
- DE-A1- 10 109 837
- DE-A1- 10 211 607
- DE-A1- 10 335 051
- DE-A1- 19 951 390
- US-B1- 6 412 462
- PATENT ABSTRACTS OF JAPAN Bd. 2002, Nr. 09, 4. September 2002 (2002-09-04) & JP 2002 138806 A (UNISIA JECS CORP), 17. Mai 2002 (2002-05-17)

## Beschreibung

### Gebiet der Erfindung

Die Erfindung betrifft einen Nockenwellenversteller für eine Brennkraftmaschine gemäß dem Oberbegriff des Anspruchs 1.

### Hintergrund der Erfindung

Aus DE 102 11 607 A1 ist ein Nockenwellenversteller zum Verstellen und Fixieren der relativen Drehwinkellage einer Nockenwelle gegenüber der Kurbelwelle einer Brennkraftmaschine bekannt. Eine hydraulische Verstelleinrichtung besitzt hierbei einen Außenrotor, der einem Antriebsrad zugeordnet ist, sowie einen Innenrotor, der über ein Abtriebselement mit einer Nockenwelle verbunden ist. Zwischen Außenrotor und Innenrotor sind Druckräume gebildet, nach deren hydraulischer Beaufschlagung die Winkelbeziehung zwischen Antriebsrad und Abtriebselement veränderbar ist.

In der genannten Druckschrift wird vorgeschlagen, das Antriebsrad und wenigstens eines der weiteren Funktionsteile einstückig aus einem hochbelastbaren Kunststoff herzustellen. Gemäß einer Ausführungsform sind das Antriebsrad und der Außenrotor sowie zwei weitere Bauelemente einstückig aus Kunststoff hergestellt.

### Aufgabe der Erfindung

Der Erfindung liegt die Aufgabe zugrunde, einen Nockenwellenversteller zu schaffen, der bei guten Herstellungsmöglichkeiten, einer geringen Zahl beteiligter Bauelemente und geringem Gewicht funktionsgerecht oder funktionsoptimiert ist.

### Zusammenfassung der Erfindung

Erfindungsgemäß wird die Aufgabe durch die Merkmale des unabhängigen Patentanspruchs 1 gelöst.

Der Erfindung liegt die Erkenntnis zugrunde, dass für die oben genannte Ausführungsform der DE 102 11 607 A1 eine Lagerfläche mit Kunststoff gebildet ist, was sowohl für einen Kontaktpartner aus Metall als auch für einen solchen ebenfalls aus Kunststoff u. U. nicht optimal ist hinsichtlich der Lagereigenschaften, der Gleiteigenschaften und des Verschleißes sowie der Betriebsfestigkeit. Findet beispielsweise für einen Außenrotor ein Kunststoff in Form eines Duroplastes Einsatz, so hat sich gezeigt, dass derartige Duroplaste Mineralien beinhalten können. Diese Mineralien führen an gleitenden Flächen, auch solchen aus Stahl, des Innenrotors zu einem erhöhten Abrieb und erhöhter Reibung und schlimmstenfalls zu einem Ausfall des Nockenwellenverstellers.

Erfindungsgemäß ist daher die Lagerfläche des Außenrotors mit einem metallischen Einlagekörper gebildet, der stoffschlüssig in einem Tragkörper aus Kunststoff aufgenommen ist. Durch diese stoffschlüssige Aufnahme können die unerwünschten Freiheitsgrade, ein Spiel und unnötige Montageschritte vermieden werden. Dennoch kann erfindungsgemäß ein metallischer Einlagekörper eingesetzt werden, so dass eine metallische Lagerfläche gegeben ist, wodurch der erhöhte Abrieb und eine erhöhte Reibung an den gleitenden Flächen vermieden werden kann. Bei dem erfindungsgemäßen Tragkörper kann es sich entweder um das Antriebsrad selber handeln oder ein weiteres Bauelement wie ein Flansch, der über entsprechende Befestigungselemente, reib-, formschlüssig und/oder stoffschlüssig, ggf. unter Zwischenschaltung weiterer Bauelemente, mit dem Antriebsrad verbunden ist.

Gemäß einer Weiterbildung der Erfindung ist der Einlagekörper in Umfangsrichtung umlaufend ausgebildet und bildet zusätzlich zu der Lagerfläche eine Begrenzung der Druckräume. Demgemäß ist der Einlagekörper multifunktional ausgebildet mit der Funktion der Lagerung und der betriebsfesten Gestaltung der Druckräume. Hierbei kann der Einlagekörper die Druckräume radial nach außen begrenzen und/oder in Umfangsrichtung und u. U. auch Begrenzungen oder Anschläge für den Innenrotor bilden. Durch die umlaufende Ausbildung des Einlagekörpers in Umfangsrichtung ist eine steife, geschlossene Ringstruktur gebildet. Zusätzlich korreliert der Einlagekörper damit die Position und Orientierung mehrerer über den Umfang verteilter Druckräume.

Zur Verbesserung der stoffschlüssigen Anbindung zwischen Außenrotor und Tragkörper kann zumindest eines der vorgenannten Bauelemente Verbindungselemente aufweisen. Bei derartigen Verbindungselementen kann es sich um Rippen, radiale Vorsprünge oder radiale Vertiefungen handeln, in welche ein verbindendes Mittel wie ein Kleber, geschmolzenes Material oder aufgespritzte Massen eines der vorgenannten Bauelemente eintreten können bzw. an diesen abgelagert werden können. Hierdurch kann die Oberfläche der Kontaktstellen zwischen dem stoffschlüssigen Verbindungsmittel und Außenrotor und Tragkörper vergrößert werden. Gleichzeitig stützt sich eine zu übertragende Kraft zwischen Außenrotor und Tragkörper infolge der Verbindungselemente über größere Flächen ab. Die übertragenen Kräfte können durch die Verbindungselemente bei geeigneter Gestaltung zwischen Scherkräften im Bereich einer Mantelfläche sowie Normalkräfte durch die radialen Vorsprünge sowie Vertiefungen übertragen werden.

Bei einem bevorzugten erfindungsgemäßen Nockenwellenversteller ist das Antriebsrad aus einem Verbundwerkstoff oder einem Faserverbundwerkstoff hergestellt. Beispielsweise können hierbei Thermoplaste oder Duroplaste Einsatz finden oder aus aus Thermoplasten und Duroplasten zusammen hergestellten Materialien. Hierdurch können entsprechend der Materialwahl und Materialkombination die mechanischen Eigenschaften des Antriebsrades auf geeignete Weise beeinflusst werden.

Gemäß einem weiteren Vorschlag der Erfindung ist (auch) der Innenrotor mit Kunststoff gebildet. Der Innenrotor weist zumindest eine stoffschlüssig mit diesem verbundene Lagerfläche aus Metall auf. Demgemäß können für den Rotor an sich die für eine Ausbildung aus Kunststoff bekannten, beispielsweise in der DE 102 11 607 A1 genannten Vorteile Verwendung finden. Zusätzlich besitzen sowohl der Innenrotor als auch der Außenrotor Lagerflächen aus Metall, was sich hinsichtlich der Gleiteigenschaften und der Betriebsfestigkeit als vorteilhaft erwiesen hat.

Entsprechend einer Weiterbildung der Erfindung ist das Antriebsrad mit einem Riemenrad oder Kettenrad aus Kunststoff gebildet und über Befestigungselemente mit dem als Flansch ausgebildeten Tragkörper aus Kunststoff verbunden, der wiederum stoffschlüssig an den Einlagekörper angebunden ist. Demgemäß ist eine Fertigung des Antriebsrades, welche beispielsweise ein Einbringen der Verzahnung mit komplexen Verzahnungsstrukturen erfordert, separat von einer Fertigung des Flansches mit Einlagekörper ermöglicht, wobei gleiche oder unterschiedliche Herstellungsverfahren und gleiche oder unterschiedliche Materialien je nach Anforderungen eingesetzt werden können. Gleichermaßen kann aber über die Befestigungselemente zwischen Antriebsrad und Flansch sowie die stoffschlüssige Verbindung zwischen Flansch und Einlagekörper eine betriebsfeste Verbindung geschaffen werden.

Für den Fall, dass die Befestigungselemente nicht mit dem ansonsten verwendeten Material des Antriebsrades bzw. des Flansches zusammenwirken sollen, ist es vorteilhaft, wenn die Befestigungselemente mit Verstärkungseinsätzen des Antriebsrades und/oder des Flansches zusammenwirken. Bei derartigen Verstärkungseinsätzen kann es sich beispielsweise um Metalleinsätze wie Inserts handeln, die sich beispielsweise mit ihrer Mantelfläche gegenüber dem weiteren Material des Antriebsrades oder des Flansches abstützen bei Gewährleistung einer guten Krafteinleitung. Etwaige Aufnahmeausnehmungen der Verstärkungseinsätze können hierbei für die Verbindung mit den Befestigungselementen gezielt gestaltet werden. Beispielsweise können in diese Gewinde eingebracht werden, mit denen die Befestigungselemente verschraubt werden. Hierdurch ist ein besonders kompakter Aufbau des Nockenwellenverstellers ermöglicht bei gleichzeitig guter Krafteinleitung und -übertragung.

Gemäß einer weiteren Ausgestaltung der Erfindung erfolgt die Verbindung zwischen Flansch und Kettenrad oder Riemenrad radial innenliegend von der Verzahnung des Kettenrades oder Riemenrades. Hierbei ist die axiale Abmessung des Ketten- oder Riemenrades bzw. von dessen Verzahnung durch die von dem Antriebsmittel wie eine Kette oder ein Riemen zu übertragenden Kraft abhängig und vorgegeben, wodurch ein Minimum der axialen Baulänge des Nockenwellenverstellers gegeben ist. Der Bauraum kann erfindungsgemäß optimal genutzt werden, da der ohnehin vorhandene Innenraum eines Ketten- oder Riemenrades für eine Anordnung der Verbindungsstelle zwischen Flansch und Kettenrad genutzt wird. Hierbei kann beispielsweise das Ketten- oder Riemenrad einen radial nach innen weisenden Steg aufweisen, der mit dem Flansch verschraubt wird. Ein weiterer erfindungsgemäßer Vorteil ist, dass durch das Antriebsmittel wie den Riemen auf das Antriebsrad übertragene Kräfte nicht mit einem großen Kippmoment auf den Innenrotor und weitere Bauelemente des Nockenwellenverstellers übertragen werden. Eine optimale Lösung ergibt sich, wenn der Steg, der Flansch bzw. die Verbindungsstelle zwischen diesen ungefähr in axialer Richtung ungefähr mittig in dem Antriebsrad angeordnet ist.

Eine noch kompaktere Ausgestaltung des erfindungsgemäßen Nockenwellenverstellers ergibt sich, wenn die Befestigungselemente bei einem Radius wirken, der kleiner ist als ein Außendurchmesser der Druckkammer. Hierdurch kann einerseits eine radiale Baugröße des Nockenwellenverstellers verringert werden, da unnötige ungenutzte Bauräume vermieden werden, insbesondere zwischen Druckkammer und Riemenrad. Andererseits kann für eine vorgegebene Größe des Antriebsrades der Außendurchmesser der Druckkammer vergrößert werden, was u. U. eine verbesserte Betätigung unter Veränderung der Hydraulikwirkung zur Folge hat.

Für einen weiter verbesserten Nockenwellenversteller sind Einlagekörper und Tragkörper über einen Spritzprozess stoffschlüssig miteinander verbunden. Demgemäß kann der Einlagekörper neben seinen Funktionen im Betrieb während der Herstellung als Formgebungsfläche für einen Spritzprozess verwendet werden, indem auf diesen Material aufgespritzt wird. Der Spritzprozess gewährleistet gleichzeitig eine besonders gute stoffschlüssige Anbindung zwischen Anlagekörper und Tragkörper.

### Kurze Beschreibung der Zeichnungen

Weitere Merkmale der Erfindung ergeben sich aus der folgenden Beschreibung und den zugehörigen Zeichnungen, in denen Ausführungsbeispiele der Erfindung schematisch dargestellt sind. Es zeigen:
- Figur 1: einen Teil eines erfindungsgemäßen Nockenwellenverstellers mit einem Außenrotor und einem Tragkörper aus Kunststoff mit stoffschlüssig angebundenem Einlagekörper sowie in dem Außenrotor verdrehbar gelagerten Innenrotor in einem Querschnitt;
- Figur 2: einen erfindungsgemäßen Nockenwellenversteller im Halblängsschnitt, bei dem das Antriebsrad aus Kunststoff über ein Befestigungselement an einen Flansch angebunden ist;
- Figur 3: ein erfindungsgemäßes Antriebszahnrad aus Kunststoff mit radial nach innen weisenden Laschen für die Aufnahme von Befestigungselementen;
- Figur 4: einen Halblängsschnitt eines Antriebsrades mit einem Steg oder einer Lasche und in den Steg oder die Lasche eingesetzten Inserts;
- Figur 5: ein Antriebszahnrad mit radial nach innen weisenden Laschen und in diesen angeordneten Inserts im Teilquerschnitt;
- Figur 6: einen erfindungsgemäßen Nockenwellenversteller im Querschnitt, wobei Befestigungselemente radial nach innen gezogen sind, so dass deren Abstand von der Längsachse des Nockenwellenverstellers kleiner ist als der Außendurchmesser der Druckkammern und
- Figur 7: ein Antriebszahnrad aus Kunststoff, welches über einen Träger an ein Gehäuse des Nockenwellenverstellers angebunden ist.

### Ausführliche Beschreibung der Erfindung

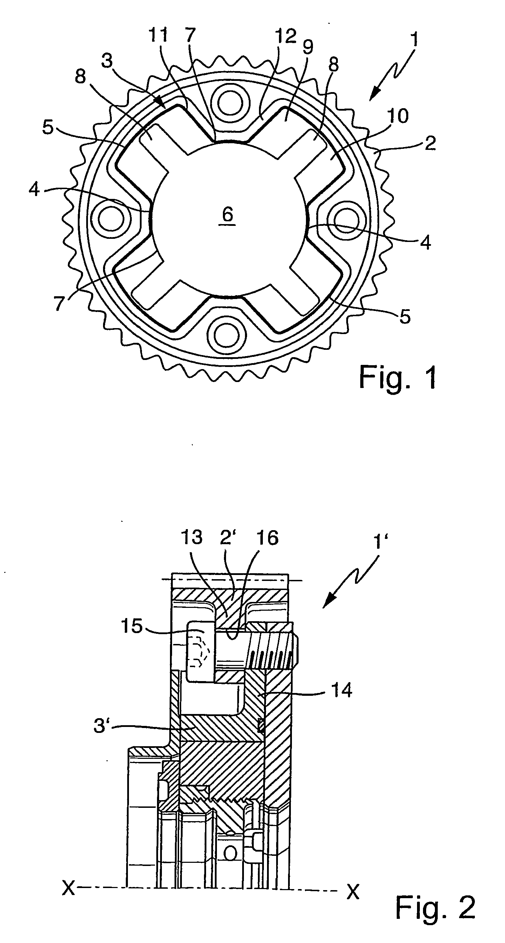

Die Erfindung betrifft einen hydraulischen Nockenwellenversteller 1 in an sich bekannter Bauart. Der Nockenwellenversteller besitzt ein Antriebsrad 2, welches in den dargestellten Ausführungsbeispielen als Riemenrad ausgebildet ist. Fest mit dem Antriebsrad 2 verbunden ist ein Außenrotor 3, der insbesondere radial innenliegend von dem Antriebsrad 2 angeordnet ist. Der Außenrotor 3 ist mit Lagerflächen 4 ausgebildet, welche Segmenten einer Mantelfläche eines Zylinders entsprechen, sowie radiale Ausbuchtungen für Druckkammern 5. Gemäß dem in Figur 1 dargestellten Ausführungsbeispiel sind vier Lagerflächen 4 sowie vier Druckkammern 5 vorgesehen, die gleichmäßig über den Umfang verteilt sind. In dem Außenrotor 3 ist relativ verdrehbar gegenüber diesem um eine Längsachse des Nockenwellenverstellers 1 ein Innenrotor 6 angeordnet, der drehfest mit der Nockenwelle verbindbar oder verbunden ist. Der Innenrotor 6 besitzt korrespondierend zu den Lagerflächen 4 des Außenrotors 3 ausgebildete Lagerflächen 7 sowie flügelartige radiale Fortsätze 8, wobei gemäß dem in Figur 1 dargestellten Ausführungsbeispiel vier Lagerflächen 7 und vier Fortsätze 8 vorgesehen sind, die beliebig oder gleichmäßig über den Umfang des Innenrotors verteilt sind. Die Lagerflächen 4 und 7 bilden eine Abdichtung in Umfangsrichtung und die Stirnflächen der Fortsätze 8 liegen radial außenliegend unter Abdichtung an den zugeordneten Druckkammern 5 an, so dass in Umfangsrichtung beidseits der Fortsätze Druckräume 9, 10 gebildet sind. Durch geeignete Beaufschlagung der Druckräume 9, 10 kann die relative Winkellage zwischen Außenrotor 3 und Innenrotor 6 verändert werden, wodurch zur Verstellung der Öffnungszeiten von Ventilen die Winkelbeziehung zwischen dem Antriebsrad 2 und einer Nockenwelle verändert werden kann.

Gemäß Figur 1 sind sowohl die Druckkammern 5 als auch die Lagerflächen 4 mit einem in Umfangsrichtung umlaufenden metallischen Einlagekörper 11 gebildet, welcher ungefähr konstante Wandstärke aufweist. Der Einlagekörper 11 ist stoffschlüssig aufgenommen in einem Tragkörper 12, der gemäß dem in Figur 1 dargestellten Ausführungsbeispiel integral mit dem Antriebsrad 2 ausgebildet ist oder als separates Bauteil ausgebildet ist, welches fest mit dem Antriebsrad 2 verbindbar ist.

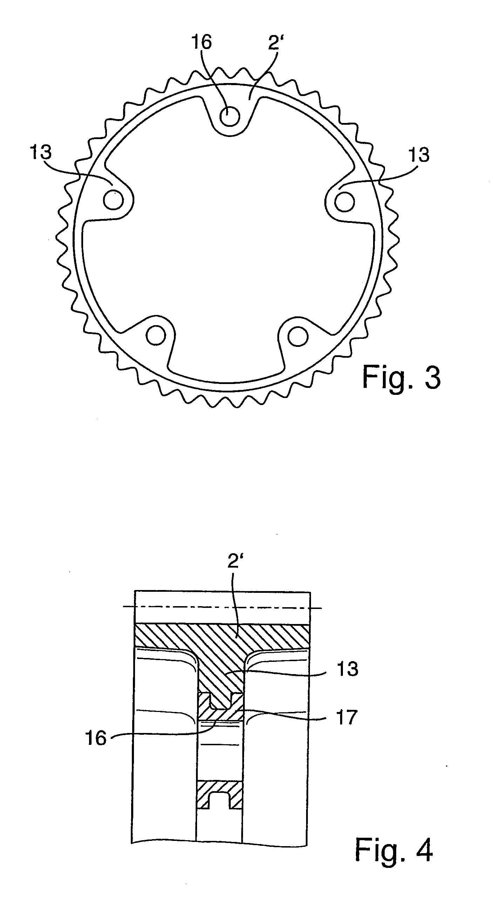

Figur 2 zeigt einen Nockenwellenversteller 1' im Längsschnitt. Bei diesem Nockenwellenversteller ist das Antriebsrad 2' integral mit nach innen ragenden, axial ungefähr mittig angeordneten Laschen 13 ausgebildet, die sich in Richtung einer Längsachse X-X des Nockenwellenverstellers 1' über ein Drittel bis ein Viertel der Breite der Laufverzahnung des Antriebsrades 2' erstrecken und beliebig oder gleichmäßig über den Umfang verteilt sind, vgl. Figur 3. An einer Stirnseite der Laschen 13 liegt ein Flansch 14 an, welcher integral mit dem Außenrotor 3' ausgebildet ist. Die Laschen 13 und der Flansch 14 sind reib-, form- oder/oder stoffschlüssig miteinander verbunden und/oder über Befestigungselemente 15, welche gemäß Figur 2 als Schraube ausgebildet sind. Hierzu besitzen die Laschen 13 sowie der Flansch 14 geeignete Bohrungen 16 mit oder ohne Gewinde. Die Bohrungen 16 mit oder ohne Gewinde können hierbei unmittelbar in das das Antriebsrad bildende Material eingebracht werden oder gemäß Figur 4 durch Verstärkungseinsätze 17 bereitgestellt werden, insbesondere Inserts, beispielsweise aus Metall, welche vorzugsweise stoffschlüssig an die weiteren integralen Elemente des Antriebsrades 2 angebunden sind.

Hinsichtlich des Antriebsrades 2, des Außenrotors 3, des Innenrotors 6, der Fortsätze 8, des Tragkörpers 12, der Laschen 13 und/oder des Flansches 14 gibt es folgende Gestaltungsmöglichkeiten:
- Die vorgenannten Bauelemente können aus einem beliebigen Kunststoff hergestellt sein oder aus einem Faserverbundwerkstoff. Insbesondere findet ein Thermoplast oder ein Duroplast beliebiger Zusammensetzung Einsatz.
- Weiterhin kann ein beliebiger Verbundwerkstoff vorgesehen werden, beispielsweise ein Kunststoff mit einem Eisenmetall oder einem Nichteisenmetall. Hinsichtlich der thermischen Ausdehnungskoeffizienten können diese gegenseitig aufeinander abgestimmt sein, so dass beispielsweise Kunststoff, Faserverbundwerkstoffe oder Verbundwerkstoffe gleiche thermische Ausdehnungskoeffizienten wie benachbarte Bauelemente aus anderen Materialien aufweisen. Insbesondere besitzen abtriebsseitig angeordnete Bauelemente, also mit der Nockenwelle fest verbundene Bauelemente, einen größeren thermischen Ausdehnungskoeffizienten als antriebsseitig angeordnete Bauelemente.
- Die vorgenannten Bauelemente können zu ein- oder mehrstückig ausgebildeten Einheiten zusammengefasst werden.
- Zur Gewichtserleichterung und zur Verbesserung der Montagemöglichkeiten können in den vorgenannten Bauelementen Taschen vorgesehen sein.
- Antriebsrad 2 und Einlagekörper 11 können, ggf. unter Zwischenschaltung weiterer (Teil-)Körper kraftschlüssig miteinander verbunden sein, beispielsweise durch Verschrauben, formschlüssig miteinander verbunden sein, beispielsweise durch Nieten, oder stoffschlüssig miteinander verbunden sein, beispielsweise durch Kleben, Aufspritzen oder einstückige Herstellung, wobei auch Kombinationen der vorgenannten Verbindungsmöglichkeiten denkbar sind.
- Nichtkunststoffelemente können als Hilfsmittel zur Verschraubung benutzt werden, beispielsweise auf Grundlage einer "mold-in"- oder "aftermolding"-Technik. Bei einer "mold-in"-Technik handelt es sich beispielsweise um eine Metallbuchse mit Gewinde, die in einer Form umspritzt wird, während als Beispiel für eine "after-mold"-Technik eine Metallbuchse mit Gewinde denkbar ist, die nach dem Spritzvorgang in ein Kunststoffteil eingebracht wird.
- Metallische Elemente oder Teilkörper können als Verstärkungsmaterial in weiteres Material eingebracht werden, beispielsweise zur Homogenisierung der Ausdehnung und/oder zur Verstärkung, zur Bildung von Stützmaterial und zur Erhöhung der Bauteilsteifigkeit.
- Eine Wahl der Materialen und deren Orientierung kann als thermischer Konstruktionsparameter verwendet werden, bei dem je nach Element und dessen Volumenanteil der Ausdehnungskoeffizient auf eine gewünschte Zielgröße eingestellt wird.
- Die Verwendung von Verstärkungseinsätzen oder Inserts kann insbesondere dazu dienen, Setzkraftverluste zu minimieren und direkte Verschraubungen zuzulassen.
- Gemäß Figur 1 kann der Außenrotor unmittelbar in ein Kunststoffmaterial eingebettet werden. Eine Vereinigung dieses Kunststoffmaterials mit dem Außenrotor kann direkt beispielsweise in einem Spritzprozess erfolgen oder aber mittels einer späteren Montage.

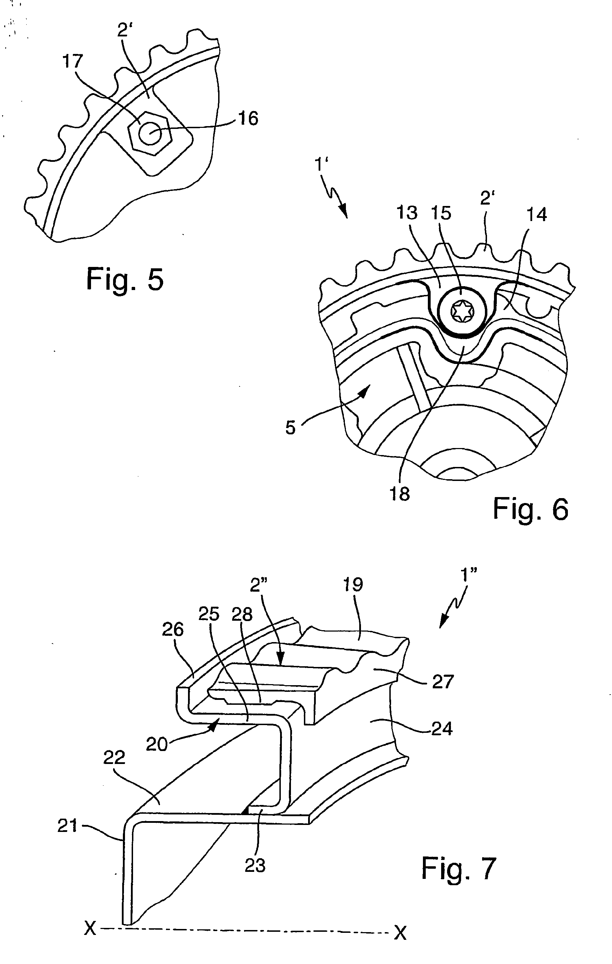

Figur 6 zeigt einen dem Ausführungsbeispiel gemäß Figur 2 zugeordneten Teilquerschnitt. Hieraus ist ersichtlich, dass der Flansch 14 keine kreisförmige Außenkontur aufweist, sondern im Anbindungsbereich an die Laschen 13 radial nach außen hervortritt. Weiterhin ist zu erkennen, dass der Außenrotor 3 Teilbereiche mit den Druckkammern 5 besitzt, welche radial nach außen hervortreten und die Befestigungselemente 15 im Bereich von Vertiefungen 18 oder radial nach innen orientierten Taschen mit dem Außenrotor 3 verbunden sind. Hierdurch können die Befestigungselemente 15 zu kleinen Radien "heruntergezogen" werden, so dass die Befestigungselemente 15 bei einem Radius wirken, der im Bereich des Außendurchmessers der Druckkammer 5 liegt oder kleiner ist als dieser. Hierbei sind die Befestigungselemente 15, die Laschen 13 und ein etwaiger Flansch 14 axial zwischen den Stirnflächen des Antriebsrades 2' vorgesehen, so dass sich eine kleine axiale Baugröße ergibt.

Figur 7 zeigt eine beispielhafte Ausgestaltung für ein Antriebsrad 2" mit zugeordneten Bauelementen, hier ein Zahnkranz 19, ein Träger 20 und ein Gehäuse 21.

Das Gehäuse 21 ist insbesondere als Blechteil ausgebildet mit einer ungefähr zylinderförmigen Mantelfläche 22 und beinhaltet weitere Bauelemente des Nockenwellenverstellers 1". An der Mantelfläche 22 stützt sich der Träger 20 fest ab, insbesondere durch eine stoffschlüssige Anbindung. Hierzu besitzt der Träger 20 einen hohlzylinderförmigen Anlagesteg 23, der radial innenliegend an der Mantelfläche 22 anliegt und an mindestens einer axialen Stirnfläche mit dem Gehäuse 21 stoffschlüssig verbunden ist. Der Anlagesteg 23 geht, insbesondere unter Zwischenschaltung eines Übergangsradius, über in einen kreisringscheibenförmigen Tragkörper 24, der koaxial zur Längsachse X-X orientiert ist und wiederum übergeht in einen hohlzylinderförmigen Außenkörper 25 mit einem umlaufenden Absatz 26 oder Bund in dem dem Tragkörper 24 gegenüberliegenden Endbereich.

Der Zahnkranz 19 liegt im Bereich einer axialen Stirnfläche an dem Absatz 26 an, während die gegenüberliegende Stirnseite des Zahnkranzes 19 einen radial nach innen ragenden radialen Ansatz 27 aufweist, der an dem Tragkörper 24 bzw. dem Übergangsbereich zwischen Tragkörper 24 und Außenkörper 25 anliegt. Radial innenliegend, insbesondere ungefähr mittig, besitzt der Zahnkranz 19 einen umlaufenden oder über Teilumfänge vorgesehenen Verbindungsbereich 28, der sich ungefähr über die halbe Breite des Zahnkranzes 19 erstreckt. Der Verbindungsbereich 28 ist mit der äußeren Mantelfläche des Außenkörpers 25 form-, reib- oder stoffschlüssig verbunden.

Für den Zahnkranz 19, den Träger 20 und das Gehäuse 21 können sämtliche zuvor erwähnten Materialien oder Materialkombinationen eingesetzt werden. Als eine beispielhafte Ausführungsform ist eine Herstellung des Zahnkranzes 19 aus Kunststoff, insbesondere einem Duroplast, denkbar; während der Träger 20 und das Gehäuse 21 aus einem Metall hergestellt sind.

### Bezugszeichenliste

- 1: Nockenwellenversteller
- 2: Antriebsrad
- 3: Außenrotor
- 4: Lagerfläche Außenrotor
- 5: Druckkammer
- 6: Innenrotor
- 7: Lagerfläche Innenrotor
- 8: Fortsätze
- 9: Druckraum
- 10: Druckraum
- 11: Einlagekörper
- 12: Tragkörper
- 13: Laschen
- 14: Flansch
- 15: Befestigungselement
- 16: Bohrung
- 17: Verstärkungseinsatz
- 18: Vertiefung
- 19: Zahnkranz
- 20: Träger
- 21: Gehäuse
- 22: Mantelfläche
- 23: Anlagesteg
- 24: Tragkörper
- 25: Außenkörper
- 26: Absatz
- 27: Ansatz
- 28: Verbindungsbereich

## Patentansprüche

1. Nockenwellenversteller (1) für eine Brennkraftmaschine, bei dem die relative Winkelbeziehung zwischen einem Antriebsrad (2) und einem einer Nockenwelle zugeordneten Abtriebselement über eine hydraulische Beaufschlagung von Druckräumen (9, 10) zwischen einem Außenrotor (3) und einem Innenrotor (6) verstellbar ist, wobei das Antriebsrad. (2) und der dem Antriebsrad (2) zugeordnete Außenrotor (3) aus kunststoff hergestellt sind **dadurch gekennzeichnet, dass** zumindest eine Lagerfläche (4) des Außenrotors (3) mit einem metallischen Einlagekörper (11) gebildet ist, der stoffschlüssig oder formschlüssig in einem Tragkörper (12) aus Kunststoff aufgenommen ist.

2. Nockenwellenversteller (1) nach Anspruch 1, **dadurch gekennzeichnet, dass** der Einlagekörper (11) in Umfangsrichtung umlaufend ausgebildet ist und zusätzlich zu der Lagerfläche (4) eine Begrenzung der Druckräume (9, 10) bildet.

3. Nockenwellenversteller (1) nach Anspruch 1 oder 2, **dadurch gekennzeichnet, dass** der Außenrotor (3) und/oder der Tragkörper (12) Verbindungselemente aufweisen.

4. Nockenwellenversteller (1) nach einem der vorhergehenden Ansprüche, **dadurch gekennzeichnet, dass** das Antriebsrad (2) aus einem Verbundwerkstoff oder Faserverbundwerkstoff hergestellt ist.

5. Nockenwellenversteller (1) Leer zeichen einfügen nach einem der vorhergehenden Ansprüche, **dadurch gekennzeichnet, dass** der Innenrotor (6) mit Kunststoff gebildet ist und zumindest eine form- oder stoffschlüssig mit dem Innenrotor (6) verbundene Lagerfläche (7) aus Metall aufweist.

6. Nockenwellenversteller (1) nach einem der vorhergehenden Ansprüche, **dadurch gekennzeichnet, dass** das Antriebsrad (2) mit einem Zahnkranz (19), Riemenrad oder Kettenrad aus Kunststoff gebildet ist und über Befestigungselemente (15) mit einem Flansch (14) aus Kunststoff verbunden ist, welcher stoffschlüssig an den Einlagekörper (11) angebunden ist.

7. Nockenwellenversteller (1) nach Anspruch 6, **dadurch gekennzeichnet, dass** die Befestigungselemente (15) mit Verstärkungseinsätzen (17) des Zahnkranzes (19) und/oder des Flansches (14) zusammenwirken.

8. Nockenwellenversteller (1) nach Anspruch 6 oder 7, **dadurch gekennzeichnet, dass** die Verbindung zwischen Flansch (14) und Zahnkranz (19) radial innenliegend von dem Zahnkranz (19) erfolgt.

9. Nockenwellenversteller (1) nach einem der Ansprüche 6 bis 8, **dadurch gekennzeichnet, dass** die Befestigungselemente (15) bei einem Radius wirken, der kleiner ist als ein Außendurchmesser der Druckkammer (5).

10. Nockenwellenversteller nach einem der vorhergehenden Ansprüche, **dadurch gekennzeichnet, dass** Einlagekörper (11) und Tragkörper (12) über einen Spritzprozess stoffschlüssig miteinander verbunden sind.

## Claims

1. Camshaft adjuster (1) for an internal combustion engine, in which the relative angular relationship between a driving wheel (2) and an output element assigned to a camshaft is adjustable by hydraulic charging of pressure spaces (9, 10) between an external rotor (3) and an internal rotor (6), wherein the driving wheel (2) and the external rotor (3) assigned to the driving wheel (2) are produced from plastic, **characterized in that** at least one bearing surface (4) of the external rotor (3) is formed by a metallic insert body (11) which is accommodated with a cohesive material joint or in a form-fitting manner in a supporting body (12) made of plastic.

2. Camshaft adjuster (1) according to Claim 1, **characterized in that** the insert body (11) is of encircling design in the circumferential direction and, in addition to the bearing surface (4), forms a boundary of the pressure spaces (9, 10).

3. Camshaft adjuster (1) according to Claim 1 or 2, **characterized in that** the external rotor (3) and/or the supporting body (12) have/has connecting elements.

4. Camshaft adjuster (1) according to one of the preceding claims, **characterized in that** the driving wheel (2) is produced from a composite material of fibre composite material.

5. Camshaft adjuster (1) according to one of the preceding claims, **characterized in that** the internal rotor (6) is formed from plastic and has at least one bearing surface (7) which is connected to the internal rotor (6) in a form-fitting manner or with a cohesive material joint and is made of metal.

6. Camshaft adjuster (1) according to one of the preceding claims, **characterized in that** the driving wheel (2) with a toothed ring (19), belt wheel or chain wheel is formed from plastic and is connected via fastening elements (15) to a flange (14) which is made of plastic and is connected to the insert body (11) with a cohesive material joint.

7. Camshaft adjuster (1) according to Claim 6, **characterized in that** the fastening elements (15) interact with reinforcing inserts (17) of the toothed ring (19) and/or of the flanges (14).

8. Camshaft adjuster (1) according to Claim 6 or 7, **characterized in that** the connection between flange (14) and toothed ring (19) is undertaken radially on the inside of the toothed ring (19).

9. Camshaft adjuster (1) according to one of Claims 6 to 8, **characterized in that** the fastening elements (15) act in the case of a radius which is smaller than an external diameter of the pressure chamber (5).

10. Camshaft adjuster according to one of the preceding claims, **characterized in that** the insert body (11) and supporting body (12) are connected to each other with a cohesive material joint via an injection-moulding process.

## Revendications

1. Dispositif de réglage d'arbre à cames (1) pour un moteur à combustion interne, dans lequel la relation angulaire relative entre une roue d'entraînement (2) et un élément de sortie associé à un arbre à cames peut être réglée par le biais d'une sollicitation hydraulique d'espaces de pression (9, 10) entre un rotor extérieur (3) et un rotor intérieur (6), la roue d'entraînement (2) et le rotor extérieur (3) associé à la roue d'entraînement (2) étant fabriqués en plastique, **caractérisé en ce qu'**au moins une surface de palier (4) du rotor extérieur (3) est formée avec un corps de doublure métallique (11) qui est reçu par engagement par liaison de matière ou par coopération de forme dans un corps porteur (12) en plastique.

2. Dispositif de réglage d'arbre à cames (1) selon la revendication 1, **caractérisé en ce que** le corps de doublure (11) est réalisé sous forme périphérique dans la direction périphérique et forme en outre une limitation des espaces de pression (9, 10) par rapport à la surface de palier (4).

3. Dispositif de réglage d'arbre à cames (1) selon la revendication 1 ou 2, **caractérisé en ce que** le rotor extérieur (3) et/ou le corps porteur (12) présentent des éléments de liaison.

4. Dispositif de réglage d'arbre à cames (1) selon l'une quelconque des revendications précédentes, **caractérisé en ce que** la roue d'entraînement (2) est fabriquée en un matériau composite ou un matériau composite renforcé par des fibres.

5. Dispositif de réglage d'arbre à cames (1) selon l'une quelconque des revendications précédentes, **caractérisé en ce que** le rotor intérieur (6) est formé avec du plastique et présente au moins une surface de palier (7) connectée par engagement par liaison de matière ou par coopération de forme avec le rotor intérieur (6).

6. Dispositif de réglage d'arbre à cames (1) selon l'une quelconque des revendications précédentes, **caractérisé en ce que** la roue d'entraînement (2) est formée avec une couronne dentée (19), une roue à courroie ou une roue à chaîne en plastique, et est connectée par le biais d'éléments de fixation (15) à une bride (14) en plastique, qui est raccordée par engagement par liaison de matière au corps de doublure (11).

7. Dispositif de réglage d'arbre à cames (1) selon la revendication 6, **caractérisé en ce que** les éléments de fixation (15) coopèrent avec des inserts de renforcement (17) de la couronne dentée (19) et/ou de la bride (14).

8. Dispositif de réglage d'arbre à cames (1) selon la revendication 6 ou 7, **caractérisé en ce que** la liaison entre la bride (14) et la couronne dentée (19) a lieu radialement à l'intérieur de la couronne dentée (19).

9. Dispositif de réglage d'arbre à cames (1) selon l'une quelconque des revendications 6 à 8, **caractérisé en ce que** les éléments de fixation (15) agissent à un rayon qui est inférieur à un diamètre extérieur de la chambre de pression (5).

10. Dispositif de réglage d'arbre à cames (1) selon l'une quelconque des revendications précédentes, **caractérisé en ce que** le corps de doublure (11) et le corps porteur (12) sont raccordés l'un à l'autre par engagement par liaison de matière par le biais d'un processus d'injection.
